(19) Europäisches Patentamt
European Patent Office
Office européen des brevets

(11) EP 4 703 430 A1

(12) **EUROPEAN PATENT APPLICATION**
published in accordance with Art. 153(4) EPC

(43) Date of publication:
**04.03.2026 Bulletin 2026/10**

(21) Application number: **24797099.9**

(22) Date of filing: **24.04.2024**

(51) International Patent Classification (IPC):
***C08L 67/04*** *(2006.01)* ***C08G 63/08*** *(2006.01)*

(52) Cooperative Patent Classification (CPC):
**C08G 63/08; C08L 67/04**

(86) International application number:
**PCT/JP2024/016164**

(87) International publication number:
**WO 2024/225353 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023 JP 2023071848**

(71) Applicant: **Kuraray Co., Ltd.**
**Kurashiki-shi, Okayama 710-0801 (JP)**

(72) Inventors:
- **ISHIO Muneki**
  **Tsukuba-shi, Ibaraki 305-0841 (JP)**
- **HOSAKA Yusaku**
  **Kamisu-shi, Ibaraki 314-0197 (JP)**
- **YAMASHITA Koji**
  **Kamisu-shi, Ibaraki 314-0197 (JP)**
- **KUBO Sayaka**
  **Tsukuba-shi, Ibaraki 305-0841 (JP)**
- **SANO Yuki**
  **Tokyo 100-0004 (JP)**
- **OKADA Yasunori**
  **Settsu-shi, Osaka 566-0072 (JP)**
- **SUNAGAWA Takenobu**
  **Settsu-shi, Osaka 566-0072 (JP)**

(74) Representative: **D Young & Co LLP**
**3 Noble Street**
**London EC2V 7BQ (GB)**

(54) **RESIN COMPOSITION**

(57) A resin composition containing a β-methyl-δ-valerolactone based polymer represented by the following general formula (I-a) or (I-b) and a 3-hydroxyalkanoate based polymer represented by the following general formula (II).

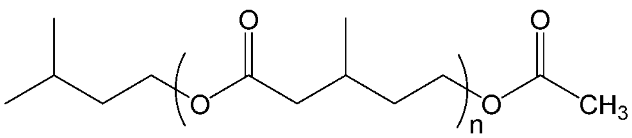
( I-a )

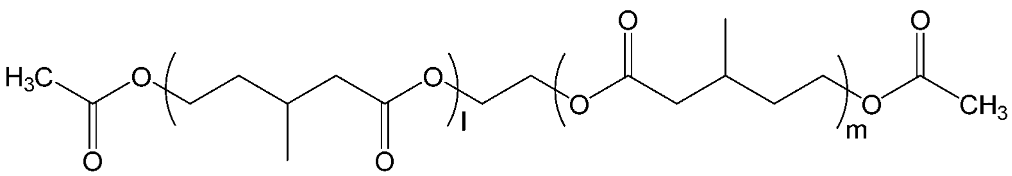
( I-b )

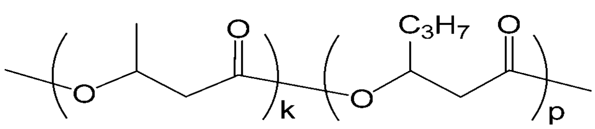
(II)

EP 4 703 430 A1

## Description

### Technical Field

The present invention relates to a resin composition containing a β-methyl-δ-valerolactone based polymer and a 3-hydroxyalkanoate based polymer.

### Background Art

In view of the global environmental conservation, there is a demand for reducing the environmental load on plastic materials used in products in a wide range of fields. For reducing the environmental load, a plastic material using a 3-hydroxyalkanoate based polymer, which is one of "biodegradable plastics", has been developed. However, a molded article formed of a 3-hydroxyalkanoate based polymer tends to be brittle and inferior in flexibility, impact resistance, and the like, as compared to petroleum-based plastics, and therefore the use thereof as a resin material may be limited.
For example, a technique relating to a resin composition containing a 3-hydroxyalkanoate based polymer having a proportion of 3-hydroxybutylate of 80% by mol or more and a polycaprolactone resin (PCL) has been described (see PTL 1). PTL 1 describes that the mixing of a 3-hydroxyalkanoate based polymer and PCL brings about the enhancement of the tensile elongation and the tear strength as compared to a 3-hydroxyalkanoate based polymer alone.

### Citation List

#### Patent Literature

PTL 1: JP 2017-222791 A

### Summary of Invention

#### Technical Problem

However, the resin composition described in PTL 1 is enhanced in impact resistance as compared to a 3-hydroxyalkanoate based polymer alone, but is not sufficiently satisfactory.
Under the circumstances, a problem to be solved by the present invention is to provide a resin composition having a good impact resistance.

#### Solution to Problem

As a result of earnest investigations for solving the problem, the present inventors have conceived of the present invention described below, and have found that the problem can be solved.
Specifically, the present invention is as follows.
[1] A resin composition containing a β-methyl-δ-valerolactone based polymer represented by the following general formula (I-a) or (I-b) and a 3-hydroxyalkanoate based polymer represented by the following general formula (II):

[Chem 1]

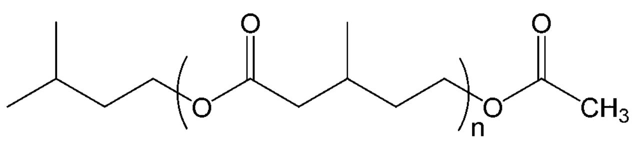

( I-a )

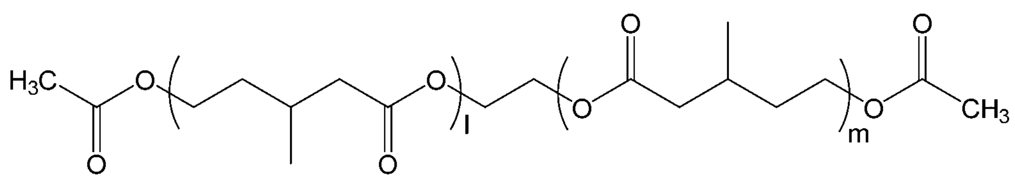

( I-b )

in which

in the general formula (I-a), n represents 5 to 20, and
in the general formula (I-b), l and m each independently represent 2 to 10,

[Chem 2]

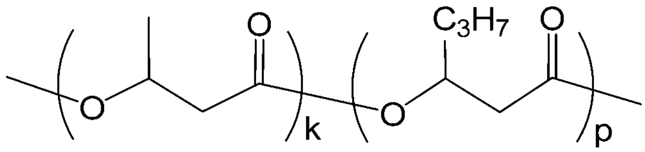

(II)

in which
in the general formula (II), a ratio of k and p (k/p) is 70/30 to 99/1.

[2] The resin composition according to [1], in which the resin composition contains 5 parts by mass or more and 20 parts by mass or less of the β-methyl-δ-valerolactone based polymer per 100 parts by mass of the 3-hydroxyalkanoate based polymer.
[3] The resin composition according to [1] or [2], in which the β-methyl-δ-valerolactone based polymer has a number average molecular weight of 1,000 to 4,000.
[4] The resin composition according to any one of [1] to [3], in which the 3-hydroxyalkanoate based polymer has a weight average molecular weight of 50,000 to 3,000,000.
[5] The resin composition according to any one of [1] to [4], in which the β-methyl-δ-valerolactone based polymer is represented by the general formula (I-a).
[6] The resin composition according to any one of [1] to [4], in which the β-methyl-δ-valerolactone based polymer is represented by the general formula (I-b).

Advantageous Effects of Invention

The present invention can provide a resin composition having a good impact resistance.

Description of Embodiments

A description is provided below based on one example of embodiments of the present invention. However, the embodiments shown below are examples for embodying the technical concept of the present invention, and the present invention is not limited to the following description.
In the description herein, preferred forms of the embodiments are described, and a combination of two or more of the preferred forms is also a preferred form. In the case where the item shown by a numerical range includes multiple numerical ranges, the lower limit values and the upper limit values thereof can be selectively combined to provide a preferred form.
In the description herein, the numerical range shown by "XX to YY" means a range of "XX or more and YY or less".

<Resin Composition>

The resin composition of the present embodiment contains a β-methyl-δ-valerolactone based polymer represented by the following general formula (I-a) or (I-b) and a 3-hydroxyalkanoate based polymer represented by the following general formula (II). The resin composition contains the β-methyl-δ-valerolactone based polymer represented by the following general formula (I-a) or (I-b) and the 3-hydroxyalkanoate based polymer represented by the following general formula (II), and thereby the resin composition becomes to achieve a good impact resistance.

[β-Methyl-δ-Valerolactone based Polymer]

The β-methyl-δ-valerolactone based polymer of the present embodiment is represented by the following general formula (I-a) or (I-b).

[Chem 3]

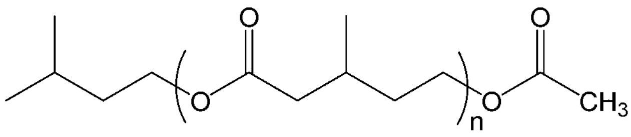

( I-a )

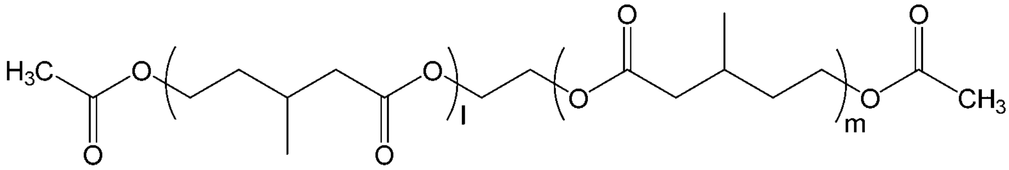

( I-b )

<n, m, l>

In the general formulae (I-a) and (I-b), n, m, and l each represent an average number of repetition.
n represents 5 to 20, and in one embodiment of the present invention preferably represents 5 to 18, and more preferably 5 to 15, and in another embodiment of the present invention, preferably represents 10 to 20, and more preferably 12 to 20.
m represents 2 to 10, preferably 2 to 9, and more preferably 2 to 7.
l represents 2 to 10, preferably 2 to 9, and more preferably 2 to 7.
m+l is preferably 4 to 18, and more preferably 4 to 14.
In the description herein, "n, m, and l" each are a value that is obtained from the ratio of the integrated proton number of the initiator structure and the integrated proton number of the repeating unit structure obtained through $^{1}$H-NMR measurement. The detailed measurement method may be in accordance with the method described in the examples.

<Number Average Molecular Weight (Mn)>

The number average molecular weight of the β-methyl-δ-valerolactone based polymer is preferably 1,000 to 4,000, more preferably 1,500 to 3,000, and further preferably 1,800 to 2,500. In the case where the number average molecular weight of the β-methyl-δ-valerolactone based polymer is in the numerical range, the viscosity of the resin composition does not become too low, and the handleability in molding and the productivity thereof are improved.
The "number average molecular weights" described in the description herein are all standard polystyrene conversion number average molecular weights measured through gel permeation chromatography (GPC). The detailed measurement method can be in accordance with the method described in the examples.

<Weight Average Molecular Weight (Mw)>

The weight average molecular weight of the β-methyl-δ-valerolactone based polymer is preferably 1,500 to 8,000, more preferably 1,500 to 6,000, and further preferably 2,000 to 5,000. In the case where the weight average molecular weight of the β-methyl-δ-valerolactone based polymer is in the numerical range, the viscosity of the resin composition does not become too low, and the handleability in molding and the productivity thereof are improved.
The "weight average molecular weights" described in the description herein are all standard polystyrene conversion weight average molecular weights measured through gel permeation chromatography (GPC). The detailed measurement method may be in accordance with the method described in the examples.

<Molecular Weight Distribution (Mw/Mn)>

The molecular weight distribution (Mw/Mn) of the β-methyl-δ-valerolactone based polymer is preferably 1.0 to 3.0, more preferably 1.0 to 2.6, further preferably 1.1 to 2.5, still further preferably 1.1 to 2.0, and still more further preferably 1.2 to 1.8.
The "molecular weight distributions" described in the description herein are all values that are obtained from the standard polystyrene conversion number average molecular weights and weight average molecular weights measured through gel permeation chromatography (GPC). The detailed measurement method of the number average molecular weight and the weight average molecular weight can be in accordance with the method described in the examples.
In one embodiment of the present invention, the β-methyl-δ-valerolactone based polymer is preferably represented by the general formula (I-a).

In another embodiment of the present invention, the β-methyl-δ-valerolactone based polymer is preferably represented by the general formula (I-b).

<Production Method>

The β-methyl-δ-valerolactone based polymer of the present embodiment is preferably produced by a production method including a step of performing terminal modification reaction by adding a terminal modifying agent to a reaction liquid obtained by reacting β-methyl-δ-valerolactone, an alcohol compound, and a basic catalyst (which may be hereinafter referred to as a "reaction step").

The production method is featured by the direct addition of a terminal modifying agent to a reaction liquid obtained by reacting β-methyl-δ-valerolactone, an alcohol compound, and a basic catalyst. In other words, after performing the ring-opening polymerization of β-methyl-δ-valerolactone, the terminal modifying agent can be added to the reactor where the ring-opening polymerization has been performed, without taking out the ring-opening polymer once, and thereby the terminal modification of the ring-opening polymer can be performed. In the reaction step, the ring-opening polymerization reaction and the terminal modification reaction are performed in one pot, and therefore the production method can be said to be a simplified process.

The production of the β-methyl-δ-valerolactone based polymer of the present embodiment is not limited to the aforementioned production method.

(Alcohol Compound)

The alcohol compound that can be used in the present embodiment is isoamyl alcohol and ethylene glycol.

In the case where isoamyl alcohol is used as the alcohol compound, the β-methyl-δ-valerolactone based polymer represented by the general formula (I-a) can be obtained, and in the case where ethylene glycol is used as the alcohol compound, the β-methyl-δ-valerolactone based polymer represented by the general formula (I-b) can be obtained.

(Basic Catalyst)

Examples of the basic catalyst that can be used in the present embodiment include a metal catalyst, such as an alkali metal and an alkali metal compound, and an organic basic compound. One kind of the basic catalyst may be used alone, or two or more kinds thereof may be used in combination.

Examples of the alkali metal compound include an organic alkali metal compound, an alkali metal hydroxide compound, and a hydrogenated alkali metal compound, in which an organic lithium compound, such as butyllithium, is preferred.

Examples of the organic basic compound include an amine compound having an amidine skeleton or a guanidine skeleton.

Examples of the basic catalyst used also include a metal catalyst, such as an organic magnesium compound and an organic zinc compound.

In the reaction step, the basic catalyst is preferably added in an amount of 0.005 to 1.5 molar equivalent with respect to the hydroxy group of the alcohol compound.

(P-Methyl-6-Valerolactone)

β-Methyl-δ-valerolactone that can be used in the present embodiment may be produced by a known method, and for example, can be produced from 2-hydroxy-4-methyltetrahydropyran or the like as a raw material by a known method (see, for example, JP 6-53691 B).

A commercially available product may also be used as β-methyl-δ-valerolactone, and any of a petrochemical product and a biological product can be used without limitation.

In the reaction step, β-methyl-δ-valerolactone is preferably added in an amount of 5 to 50 molar equivalent with respect to the hydroxy group of the alcohol compound.

(Terminal Modifying Agent)

In the present embodiment, acetic anhydride is used as the terminal modifying agent.

In the reaction step, acetic anhydride is preferably added as a terminal modifying agent in an amount of 1.0 to 20.0 molar equivalent with respect to the hydroxy group of the alcohol compound.

(Co-catalyst)

In the reaction step, a co-catalyst may be added depending on necessity.
Examples of the co-catalyst used include an amine compound, such as triethylamine, tributylamine, trioctylamine, imidazole, pyridine, aminopyridine, and 4-dimethylaminopyridine.
In the reaction step, the co-catalyst may be added in an amount of 0.001 to 10 molar equivalent with respect to the hydroxy group of the alcohol compound.

(Solvent)

The reaction step may be performed in the presence of a solvent that is inert to the ring-opening polymerization reaction. Examples of the solvent include an aliphatic hydrocarbon, such as cyclohexane, methylcyclohexane, n-hexane, and n-pentane, and an aromatic hydrocarbon, such as benzene, toluene, and xylene.

(Reaction Condition)

In the reaction step, the reaction temperature in reacting β-methyl-δ-valerolactone and the alcohol compound with the basic catalyst may be generally 20 to 100°C, and the reaction time is generally 1 minute to 24 hours.
In the reaction step, the reaction temperature in reacting the terminal modification reaction after adding the terminal modifying agent to the reaction liquid may be generally 20 to 80°C, and the reaction time is generally 1 minute to 24 hours.

(Post-treatment Step)

The polymer of the present embodiment can be obtained through the aforementioned reaction step. A post-treatment step may be performed for isolating the produced polymer depending on necessity.
The post-treatment step performed may be a preferred method selected from known methods. For example, the purification can be performed by a method generally used for isolation and purification of organic compounds, for example, including washing the reaction mixture obtained after the reaction step with a reaction solvent or water, followed by concentrating and distilling.

[3-Hydroxyalkanoate Based Polymer]

The 3-hydroxyalkanoate based polymer of the present embodiment is represented by the following general formula (II).

[Chem 4]

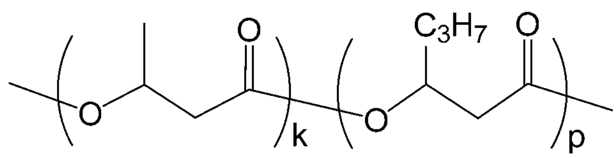

(II)

<k/p>

The ratio of k and p (k/p) means the ratio of the structural units, and is 70/30 to 99/1. In the case where the ratio k/p is 70/30 or more, the molded article produced by using the resin composition has a sufficient strength and excellent practicality, and in the case where the ratio is 99/1 or less, the resin composition has a good impact resistance.
In the description herein, "k and p" each are a value that is obtained through gas chromatography measurement according to the following method.
Two mL of a sulfuric acid-methanol mixture (15/85) and 2 mL of chloroform are added to 20 mg of the 3-hydroxyalkanoate based polymer, which are sealed and heated 100°C for 140 minutes, so as to provide a methyl ester of the decomposition product of the 3-hydroxyalkanoate based polymer. After cooling, 1.5 g of sodium hydrogen carbonate is gradually added thereto for neutralization, followed by allowing to stand until no more carbon dioxide gas is produced. Subsequently, 4 mL of diisopropyl ether is added thereto, which are then well mixed, and the mixture is subjected to centrifugal separation. The compositional ratio of monomer units of the polyester decomposition product in the supernatant is analyzed under the following measurement condition.

(Measurement Condition)

Apparatus: Gas chromatograph GC-17A (available from Shimadzu Corporation)
Capillary column: Neutra Bond-1 (available from GL Sciences Inc., column length: 25 m, column inner diameter: 0.25 mm, liquid film thickness: 0.4 μm)

<Number Average Molecular Weight (Mn)>

The number average molecular weight of the 3-hydroxyalkanoate based polymer is preferably 20,000 to 1,000,000, and more preferably 50,000 to 700,000. In the case where the number average molecular weight is in the numerical range, the viscosity of the resin composition can be suppressed from becoming too low or too high, and the handleability in molding and the productivity thereof are improved.

<Weight Average Molecular Weight (Mw)>

The weight average molecular weight of the 3-hydroxyalkanoate based polymer is preferably 50,000 to 3,000,000, and more preferably 100,000 to 1,500,000. In the case where the weight average molecular weight is in the numerical range, the viscosity of the resin composition can be suppressed from becoming too low or too high, and the handleability in molding and the productivity thereof are improved.

<Molecular Weight Distribution (Mw/Mn)>

The molecular weight distribution (Mw/Mn) of the 3-hydroxyalkanoate based polymer is preferably 1.0 to 3.0, more preferably 1.1 to 2.0, further preferably 1.2 to 1.8.

<Production Method>

The 3-hydroxyalkanoate based polymer of the present embodiment is preferably produced by microorganisms, i.e., is preferably produced through a fermentation synthesis method. The microorganisms that can be used in the fermentation synthesis method are not particularly limited, as long as being microorganisms capable of producing the 3-hydroxyalkanoate based polymer. Examples of the known microorganisms capable of producing the 3-hydroxyalkanoate based polymer include Aeromonas caviae, Alcaligenes eutrophus, which is a poly(3-hydroxybutyrate-co-4-hydroxybutyrate)-producing bacterium and the like. From the standpoint of the productivity, Alcaligenes eutrophus AC32, FERM BP-6038, transfected with the genes encoding the synthetic enzymes (J.Bateriol., 179, pp. 4821-4830 (1997)) and the like are preferred, and microbial cells having the 3-hydroxyalkanoate based polymer accumulated in the cells obtained through cultivation of the microorganisms under an appropriate condition can also be used.

The carbon source and the cultivation conditions used in the cultivation of the microorganisms capable of producing the 3-hydroxyalkanoate based polymer are described in JP 5-93049 A, JP 2001-340078 A, and the like. For example, a fat or oil, such as a vegetable oil or a fish oil, is used as the carbon source, and the cultivation is performed under conditions of limited nutrients other than the carbon source, such as nitrogen, phosphorus, and minerals, so as to produce the 3-hydroxyalkanoate based polymer as storage substances inside the microbial cells. The cultivation conditions including the pH, the temperature, the aeration rate, the cultivation time, and the like are regulated appropriately in the cultivation.

[Content Ratio]

The resin composition of the present embodiment contains the β-methyl-δ-valerolactone based polymer in an amount of preferably 5 parts by mass or more and 20 parts by mass or less, and more preferably 10 parts by mass or more and 20 parts by mass or less, per 100 parts by mass of the 3-hydroxyalkanoate based polymer. With the aforementioned content ratio, the resin composition can have a better impact resistance.

The total content ratio of the β-methyl-δ-valerolactone based polymer and the 3-hydroxyalkanoate based polymer in the resin composition of the present embodiment is preferably 80% by mass or more, more preferably 85% by mass or more, further preferably 90% by mass or more, still further preferably 95% by mass or more, and still more further preferably 98% by mass or more, and may be 100% by mass. With the aforementioned content ratio, the effects of the present invention can be exhibited more conspicuously.

The content ratio of the β-methyl-δ-valerolactone based polymer in the resin composition of the present

embodiment is preferably 5% by mass or more, and more preferably 10% by mass or more, and is preferably 20% by mass or less, and more preferably 18% by mass or less. Accordingly, the content ratio of the β-methyl-δ-valerolactone based polymer in the resin composition of the present embodiment is preferably 5 to 20% by mass, and more preferably 10 to 18% by mass. With the aforementioned content ratio, the effects of the present invention can be exhibited more conspicuously.

The content ratio of the 3-hydroxyalkanoate based polymer in the resin composition of the present embodiment is preferably 80% by mass or more, and more preferably 82% by mass or more, and is preferably 95% by mass or less, and more preferably 90% by mass or less. Accordingly, the content ratio of the 3-hydroxyalkanoate based polymer in the resin composition of the present embodiment is preferably 80 to 95% by mass, and more preferably 82 to 90% by mass. With the aforementioned content ratio, the effects of the present invention can be exhibited more conspicuously.

[Additive]

The resin composition of the present embodiment may contain an additive in addition to the β-methyl-δ-valerolactone based polymer and the 3-hydroxyalkanoate based polymer.

Examples of the additive include an inorganic filler, a softener, a heat aging inhibitor, an antioxidant, a hydrolysis inhibitor, a light stabilizer, an antistatic agent, a release agent, a flame retardant, a blowing agent, a pigment, a dye, a brightening agent, an ultraviolet ray absorbent, and a lubricant. One kind thereof may be used alone, or two or more kinds thereof may be used in combination.

In the case where the additive is used, the content of the additive in the resin composition may be appropriately determined in consideration of the intended properties of the resin composition.

[Production Method of Resin Composition]

The production method of the resin composition of the present embodiment is not particularly limited, and it suffices that the β-methyl-δ-valerolactone based polymer, the 3-hydroxyalkanoate based polymer, and the additive depending on necessity are uniformly mixed thereby.

Examples of the mixing method include a method of melt-kneading with a single screw extruder, a multiple screw extruder, a Banbury mixer, heat rolls, a Brabender mixer, various kneaders, or the like, and a method of melt-kneading after feeding the components from separate charging ports respectively.

Pre-blending may be performed before the melt kneading. Examples of the method of pre-blending include a method using a mixer, such as a Henschel mixer, a high-speed mixer, a V-blender, a ribbon blender, a tumbler blender, and a conical blender. The temperature in the melt kneading is preferably approximately 185°C as the upper limit in consideration of the melting point and the decomposition temperature of the 3-hydroxyalkanoate based polymer. Accordingly, the temperature may be, for example, approximately 100 to 185°C, and may be optionally selected from a range of 120 to 180°C.

<Molded Article>

The use of the resin composition of the present embodiment can provide a molded article having a good impact resistance.

The shape of the molded article may be a molded article that can be produced by using the resin composition of the present embodiment. Examples of the molded article include molded articles in various forms, such as pellets, a film, a sheet, a plate, a pipe, a tube, a bottle, fibers, a bar, fine particles, particles, and an expanded article. The production method of the molded article is not particularly limited, and the molded articles can be molded by a known method, such as injection molding, blow molding, press molding, extrusion molding, calender molding, and molding with a 3D printer.

[Application]

The β-methyl-δ-valerolactone based polymer represented by the general formula (I-a) or (I-b) can enhance the impact resistance of the 3-hydroxyalkanoate based polymer by mixing therewith to form a resin composition. Therefore, the β-methyl-δ-valerolactone based polymer represented by the general formula (I-a) or (I-b) is useful as a modifier for the 3-hydroxyalkanoate based polymer.

Examples

The present invention will be described more specifically with reference to Examples and Comparative Example below, but the present invention is not limited thereto.

<Measurement and Evaluation Methods>

Various properties were measured or evaluated by the following methods.

[Average Polymerization Degree of β-Methyl-δ-Valerolactone based Polymer]

The polymerization degree of the terminal modified product of the β-methyl-δ-valerolactone based polymer obtained in Production Example was calculated from the ratio of the proton signal of the repeating unit of the polymer based on the proton signal of the initiator alcohol obtained in $^1$H-NMR measurement. The specific measurement method was as follows.

(Measurement Condition)

Apparatus: 400YH (available from JEOL, Ltd.)
Solvent: deuterated chloroform ($CDCl_3$)
Measurement temperature: 23°C

(Calculation Method of Polymerization Degree)

In Production Example I-1, the value of n was obtained from the proton number X of the terminal $CH_3$ of isoamyl alcohol as the initiator (0.9-0.92 ppm, d) and the proton number Y of the methyl branch $CH_3$ of β-methyl-δ-valerolactone as the repeating unit (0.98-1.00 ppm, d) according to the following expression (1).

$$n = 2 \times Y/X \qquad (1)$$

In Production Example 1-2, the value of l + m was obtained from the proton number X' of $CH_2$ of ethylene glycol as the initiator (4.28-4.30 ppm, m) and the proton number Y' of the methyl branch $CH_3$ of β-methyl-δ-valerolactone as the repeating unit (0.98-1.00 ppm, d) according to the following expression (2).

$$L + m = 4 \times Y'/(3 \times X') \qquad (2)$$

[k/p of 3-Hydroxyalkanoate based Polymer]

The value of k/p of the 3-hydroxyalkanoate based polymer (P3HB3HH-1) was obtained through gas chromatography measurement. The specific measurement method was as follows.

Two mL of a sulfuric acid-methanol mixture (15/85) and 2 mL of chloroform were added to 20 mg of P3HB3HH-1 obtained in Production Example, which were sealed and heated 100°C for 140 minutes, so as to provide a methyl ester of the decomposition product of the 3-hydroxyalkanoate based polymer. After cooling, 1.5 g of sodium hydrogen carbonate was gradually added thereto for neutralization, followed by allowing to stand until no more carbon dioxide gas was produced. Subsequently, 4 mL of diisopropyl ether was added thereto, which were then well mixed, and the mixture was subjected to centrifugal separation. The compositional ratio of monomer units of the polyester decomposition product in the supernatant was analyzed under the following measurement condition.

(Measurement Condition)

Apparatus: Gas chromatograph GC-17A (available from Shimadzu Corporation)
Capillary column: Neutra Bond-1 (available from GL Sciences Inc., column length: 25 m, column inner diameter: 0.25 mm, liquid film thickness: 0.4 μm)

[Number Average Molecular Weight and Weight Average Molecular Weight of β-Methyl-δ-Valerolactone based Polymer]

The polymer after subjecting the β-methyl-δ-valerolactone based polymer to the terminal modification reaction

was used as a sample, which was measured for the number average molecular weight (Mn) and the weight average molecular weight (Mw) of the β-methyl-δ-valerolactone based polymer in terms of standard polystyrene conversion molecular weight through gel permeation chromatography (GPC). The specific measurement method was as follows.

Tetrahydrofuran (THF) was used as an eluent, and 10 mg of the sample was weighed and dissolved in 1 mL of the eluent. The solution was filtered through a membrane filter of 0.2 μm to produce a measurement sample. The specific measurement method was as follows.

(Measurement Condition)

Apparatus: HLC-EcoSEC8320GPC (available from Tosoh Corporation)
Columns: three columns, KF-803 (available from Resonac Corporation), KF-802.5 (available from Resonac Corporation), and KF-802 (available from Resonac Corporation), connected in series
Eluent: tetrahydrofuran
Flow rate: 0.9 mL/min
Injection amount of sample: 30 μL
Column temperature: 40°C
Standard polystyrene: PSt Oligomer Kit (molecular weight: 589 to 98,900), available from Tosoh Corporation, approximated by cubic equation
Detector: RI detector

[Weight Average Molecular Weight of 3-Hydroxyalkanoate based Polymer]

The weight average molecular weight (Mw) of the 3-hydroxyalkanoate based polymer was obtained in terms of standard polystyrene conversion molecular weight through gel permeation chromatography (GPC). The specific measurement method was as follows.

(Measurement Condition)

Apparatus: High performance liquid chromatograph LC-20A (available from Shimadzu Corporation)
Columns: K-G 4A (×1) and K-806M (×2) (available from Resonac Corporation), connected in series
Eluent: chloroform
Flow rate: 1.0 mL/min
Injection amount of sample: 100 μL
Column temperature: 40°C
Standard polystyrene: Polystyrene Standard, available from Agilent Technologies, Inc. (molecular weight: 2,880 to 6,570,000), approximated by quintic equation
Detector: RI detector

[Impact Resistance Test]

(1) Production of Test Piece for Impact Resistance Test

The resin composition (pellets) obtained in Examples and Comparative Example was placed in an injection molding machine ("SI-30IV-CCH150B", available from Shibaura Machine Co., Ltd.), and molded into a flat plate molded article of 80 × 80 mm and 1 mm in thickness at a cylinder temperature of 120 to 150°C (outlet port resin temperature: 160°C) and a mold temperature of 35°C. The resulting flat plate molded article was cut into a size of 40 × 40 mm to produce a test piece.

(2) Impact Resistance Test

The resulting test piece was evaluated for the impact resistance according to JIS K7211-1:2006 with a DuPont drop impact tester (available from Yasuda Seiki Seisakusho, Ltd.)

When a weight of 2 kg was dropped from a height of 100 cm, a case where the test piece was not broken was evaluated as "G", and a case where the test piece was broken was evaluated as "NG".

[Production Example I-1]

A four-neck glass flask having a capacity of 500 mL was purged with nitrogen, in which 7.9 g (90 mmol) of isoamyl alcohol and 231 g (2.025 mol) of β-methyl-δ-valerolactone were placed, and heated to 60°C. Thereto, 0.84 mL of n-butyl lithium (1.6 M hexane solution) was added, and the mixture was agitated at 60°C for 60 minutes.
Subsequently, 11.0 g (108 mmol) of acetic anhydride and 0.55 g (4.5 mmol) of 4-dimethylaminopyridine dissolved in 5.5 g of β-methyl-δ-valerolactone was placed in the four-neck glass flask, and the mixture was agitated at 60°C for 60 minutes to provide a reaction liquid containing a β-methyl-δ-valerolactone based polymer.
The resulting reaction liquid containing a β-methyl-δ-valerolactone based polymer was purified through extraction with toluene and water, and with a thin film evaporator ("Molecular Distillation Apparatus MS-300", available from Sibata Scientific Technology Ltd.) to provide 155 g of a β-methyl-δ-valerolactone based polymer.
The resulting β-methyl-δ-valerolactone based polymer (which may be hereinafter referred to as "PMVL-1") is represented by the general formula (I-a).
The properties of the resulting PMVL-1 were measured in the aforementioned manner. The results are shown in Table 1.

[Production Example I-2]

A four-neck glass flask having a capacity of 500 mL was purged with nitrogen, in which 11.3 g (183 mmol) of ethylene glycol and 184 g (1.616 mol) of β-methyl-δ-valerolactone were placed, and heated to 60°C. Thereto, 1.18 mL of n-butyl lithium (1.6 M hexane solution) was added, and the mixture was agitated at 60°C for 60 minutes.
Subsequently, 44.2 g (433 mmol) of acetic anhydride and 2.23 g (18.3 mmol) of 4-dimethylaminopyridine dissolved in 20.8 g of β-methyl-δ-valerolactone was placed in the four-neck glass flask, and the mixture was agitated at 60°C for 60 minutes to provide a reaction liquid containing a β-methyl-δ-valerolactone based polymer.
The resulting reaction liquid containing a β-methyl-δ-valerolactone based polymer was purified through extraction with toluene and water, and with a thin film evaporator ("Molecular Distillation Apparatus MS-300", available from Sibata Scientific Technology Ltd.) to provide 161 g of a β-methyl-δ-valerolactone based polymer.
The resulting β-methyl-δ-valerolactone based polymer (which may be hereinafter referred to as "PMVL-2") is represented by the general formula (I-b).
The properties of the resulting PMVL-2 were measured in the aforementioned manner. The results are shown in Table 1.

[Production Example II]

Cultivation was performed with Alcaligenes eutrophus AC32 strain (Accession No. FERM BP-6038) transfected with the genes encoding the polyhydroxyalkanoate synthetic enzymes derived from Aeromonas caviae according to the method described in Example 1 of JP 2001-340078 A, so as to produce a 3-hydroxyalkanoate based polymer. Specifically, Alcaligenes eutrophus AC32 (Accession No. FERM BP-6038) (which may be hereinafter referred to as "AC32 strain") was cultivated in the following manner. The composition of the cultivation medium was 1 w/v% of Meat-extract, 1 w/v% of Bacto-Trypton, 0.2 w/v% of Yeast-extract, 0.9 w/v% of $Na_2HPO_4 \cdot 12H_2O$, and 0.15 w/v% of $KH_2PO_4$, (pH 6.7). The composition of the polyester production cultivation medium was 1.1 w/v% of $Na_2HPO_4 \cdot 12H_2O$, 0.19 w/v% of $KH_2PO_4$, 0.6 w/v% of $(NH_4)_2SO_4$, 0.1 w/v% of $MgSO_4 \cdot 7H_2O$, 0.5 v/v% of a trace metal salt solution (obtained by dissolving 1.6 w/v% of $FeCl_3 \cdot 6H_2O$, 1 w/v% of $CaCl_2 \cdot 2H_2O$, 0.02 w/v% of $CoCl_2 \cdot 6H_2O$, 0.016 w/v% of $CuSO_4 \cdot 5H_2O$, 0.012 w/v% of $NiCl_3 \cdot 6H_2O$, and 0.01 w/v% of $CrCl_3 \cdot 6H_2O$ in 0.1 N hydrochloric acid), 2 w/v% of Pro-Extract AP-12 (available from Bansyutyoumiriyou Co., Ltd.), and $5 \times 10^{-6}$ w/v% of Kanamycin. The carbon source used was only a fat or oil, and 4 w/v% of a palm oil, a palm kernel oil, or a coconut oil was added in three portions. The glycerol stock of the AC32 strain was inoculated into a preculture medium and cultivated for 20 hours, and then 1.5 v/v% thereof was inoculated into a 10 L jar fermenter ("MD-500", available from B.E. Marubishi Co.,Ltd.) having 6 L of the production cultivation medium. The operation condition was a cultivation temperature of 30°C, agitation rate of 400 rpm, and an aeration rate of 1.8 L/min, and the pH was regulated between 6.6 and 6.8. The pH was regulated with 5N sulfuric acid and sodium hydroxide. The cultivation was performed for 72 hours. The cells were recovered through centrifugal separation, washed with methanol, and then freeze-dried. The 3-hydroxyalkanoate based polymer was extracted from the dried cells with chloroform, the cell component was removed from the chloroform solution containing the 3-hydroxyalkanoate based polymer through filtration, and methanol was added to the filtrate to precipitate the 3-hydroxyalkanoate based polymer. Thereafter, the supernatant was removed through centrifugal separation, and the residue was dried to provide the 3-hydroxyalkanoate based polymer.
The resulting 3-hydroxyalkanoate based polymer (which may be hereinafter referred to as "P3HB3HH-1") is represented by the general formula (II).
The properties of the resulting P3HB3HH-1 were measured in the aforementioned manner. The results are

shown in Table 1.

[Table 1]

Table 1

| | Polymer | Number average molecular weight | Weight average molecular weight | n | l+m | k/p |
|---|---|---|---|---|---|---|
| Production Example 1-1 | PMVL-1 | 4,000 | 5,300 | 17.9 | - | - |
| Production Example I-2 | PMVL-2 | 2,100 | 2,940 | - | 10.7 | - |
| Production Example II | P3HB3HH-1 | - | 590,000 | - | - | 83.8/16.2 |

[Examples 1 and 2 and Comparative Example 1]

The β-methyl-δ-valerolactone based polymer and the 3-hydroxyalkanoate based polymer obtained in Production Examples were placed in a co-rotating intermeshing twin-screw extruder ("TEM26ss", available from Shibaura Machine Co., Ltd.), and melt-kneaded at a cylinder temperature of 140 to 160°C and a screw rotation number of 100 rpm, and the extruded strand was cut to produce a resin composition (pellets). The evaluation results of the resin composition are shown in Table 2.

[Table 2]

Table 2

| | | | Example | | Comparative Example |
|---|---|---|---|---|---|
| | | | 1 | 2 | I |
| Composition | 3-Hydroxyalkanoate based polymer | P3HB3HH-1 (part by mass) | 100 | 100 | 100 |
| | B-Methyl-6-valerolactone based polymer | PMVL-1 (part by mass) | 20 | - | - |
| | | PMVL-2 (part by mass) | - | 20 | - |
| Evaluation | Impact resistance | 0°C | G | G | NG |
| | | -15°C | NG | G | NG |

It is understood from Examples 1 and 2 and Comparative Example 1 that the resin compositions obtained in Examples each are a resin composition having an enhanced impact resistance at the temperatures. It is understood from Examples 1 and 2 and Comparative Example 1 that the β-methyl-δ-valerolactone based polymers obtained in Production Examples 1 and 2 each are useful as a modifier for the 3-hydroxyalkanoate based polymer.

## Claims

1. A resin composition comprising a β-methyl-δ-valerolactone based polymer represented by the following general formula (I-a) or (I-b) and a 3-hydroxyalkanoate based polymer represented by the following general formula (II):

[Chem 1]

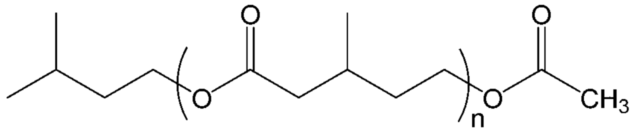

( I-a )

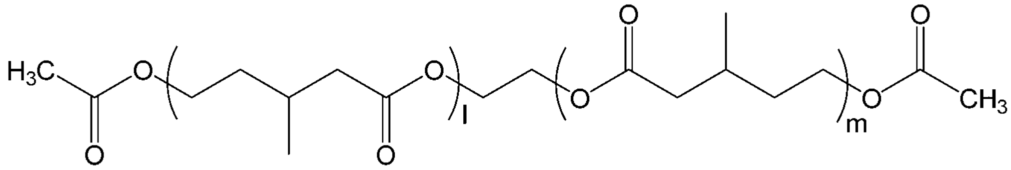

( I-b )

wherein

in the general formula (I-a), n represents 5 to 20, and
in the general formula (I-b), l and m each independently represent 2 to 10,

[Chem 2]

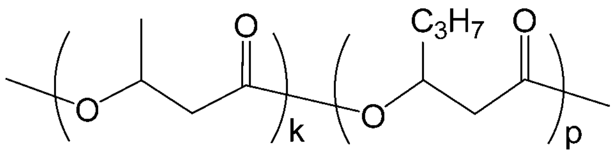

(II)

wherein
in the general formula (II), a ratio of k and p (k/p) is 70/30 to 99/1.

**2.** The resin composition according to claim 1, wherein the resin composition comprises 5 parts by mass or more and 20 parts by mass or less of the β-methyl-δ-valerolactone based polymer per 100 parts by mass of the 3-hydroxyalkanoate based polymer.

**3.** The resin composition according to claim 1 or 2, wherein the β-methyl-δ-valerolactone based polymer has a number average molecular weight of 1,000 to 4,000.

**4.** The resin composition according to any one of claims 1 to 3, wherein the 3-hydroxyalkanoate based polymer has a weight average molecular weight of 50,000 to 3,000,000.

**5.** The resin composition according to any one of claims 1 to 4, wherein the β-methyl-δ-valerolactone based polymer is represented by the general formula (I-a).

**6.** The resin composition according to any one of claims 1 to 4, wherein the β-methyl-δ-valerolactone based polymer is represented by the general formula (I-b).

**INTERNATIONAL SEARCH REPORT**

International application No.
**PCT/JP2024/016164**

**A. CLASSIFICATION OF SUBJECT MATTER**

***C08L 67/04***(2006.01)i; ***C08G 63/08***(2006.01)i
FI: C08L67/04; C08G63/08

According to International Patent Classification (IPC) or to both national classification and IPC

**B. FIELDS SEARCHED**

Minimum documentation searched (classification system followed by classification symbols)

C08L67/04; C08G63/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2-97519 A (MITSUBISHI RAYON CO., LTD.) 10 April 1990 (1990-04-10)<br>entire text | 1-6 |
| A | JP 2009-173803 A (TOSOH CORP.) 06 August 2009 (2009-08-06)<br>entire text | 1-6 |
| A | CN 115057997 A (YANGZHOU HUITONG BIO-NEW MATERIALS CO., LTD.) 16 September 2022 (2022-09-16)<br>entire text | 1-6 |
| A | WO 2017/150112 A1 (FUJIFILM CORPORATION) 08 September 2017 (2017-09-08)<br>entire text | 1-6 |
| P, A | WO 2023/068346 A1 (KURARAY CO., LTD.) 27 April 2023 (2023-04-27)<br>entire text | 1-6 |
| P, A | WO 2023/068348 A1 (KURARAY CO., LTD.) 27 April 2023 (2023-04-27)<br>entire text | 1-6 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/016164**

| Patent document cited in search report | Publication date (day/month/year) | Patent family member(s) | Publication date (day/month/year) |
|---|---|---|---|
| JP 2-97519 A | 10 April 1990 | (Family: none) | |
| JP 2009-173803 A | 06 August 2009 | (Family: none) | |
| CN 115057997 A | 16 September 2022 | (Family: none) | |
| WO 2017/150112 A1 | 08 September 2017 | US 2018/0355088 A1<br>entire text<br>JP 2020-114925 A<br>KR 10-2018-0104707 A<br>TW 201735773 A | |
| WO 2023/068346 A1 | 27 April 2023 | TW 202328271 A | |
| WO 2023/068348 A1 | 27 April 2023 | TW 202330778 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2017222791 A
- JP 6053691 B
- JP 5093049 A
- JP 2001340078 A

### Non-patent literature cited in the description

- *J.Bateriol.*, 1997, vol. 179, 4821-4830